(19) Europäisches Patentamt
European Patent Office
Office européen des brevets

(11) **EP 2 936 086 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **13799587.4**

(22) Anmeldetag: **05.12.2013**

(51) Int Cl.:
*G01G 3/14* *(2006.01)*    *G01G 23/00* *(2006.01)*
*G01L 1/22* *(2006.01)*    *G01L 5/16* *(2020.01)*
*G01L 1/26* *(2006.01)*

(86) Internationale Anmeldenummer:
**PCT/EP2013/075682**

(87) Internationale Veröffentlichungsnummer:
**WO 2014/095397 (26.06.2014 Gazette 2014/26)**

(54) **WÄGEZELLE MIT SCHRÄGSTELLUNGSKOMPENSATION**

LOAD CELL WITH COMPENSATION OF INCLINATION

CELLULE DE PESAGE AVEC COMPENSATION D'INCLINAISON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 EP 12198128**

(43) Veröffentlichungstag der Anmeldung:
**28.10.2015 Patentblatt 2015/44**

(73) Patentinhaber: **Mettler-Toledo GmbH**
**8606 Greifensee (CH)**

(72) Erfinder:
• **ZIEBART, Volker**
**CH-8542 Wiesendangen (CH)**
• **SELIG, Klaus, Peter**
**72469 Heinstetten (CH)**
• **LOHER, Urs**
**CH-8967 Widen (CH)**

(74) Vertreter: **Mettler-Toledo**
**IP Department**
**Im Langacher 44**
**8606 Greifensee (CH)**

(56) Entgegenhaltungen:
**EP-A2- 0 209 400    JP-A- 2010 210 357**
**US-B1- 7 188 535**

EP 2 936 086 B1

## Beschreibung

Die Erfindung betrifft eine Stempelwägezelle mit einem Verformungskörper, mit einem zur Ausgabe eines der Last entsprechenden Messsignals bestimmten ersten Bestimmungsmittel, welches an der Aussenfläche des Verformungskörpers angebracht ist, und einem zur Ermittlung eines der Fehlstellung entsprechenden Kompensationswertes bestimmten zweiten Bestimmungsmittel.

Verwendet werden Stempelwägezellen zur Überwachung von Füllständen in Tanks, bei Ladewannen an Lastkraftfahrzeugen und in Wägeanlagen für Fahrzeuge. Meist wird die Gesamtlast über eine Tragkonstruktion, zum Beispiel eine Waagenbrücke, auf mehrere Stempelwägezellen verteilt.

Stempelwägezellen sind in etwa zylinderförmige Lastzellen, die in Richtung ihrer Rotationssymmetrieachse zwischen zwei Krafteinleitungselementen belastet werden. Für die Krafteinleitung weisen die zylinderförmigen Lastzellen einen Verformungskörper mit Zylinderendflächen auf, welche zu diesem Zweck konvex ausgestaltet sind, in der Regel mit einem Radius, der grösser ist als die halbe Höhe der Zelle. Dadurch ist eine solche Stempelwägezelle selbstaufrichtend, d.h. bei Schrägstellung wirken Rückstellkräfte, die versuchen, die Zelle wieder in eine senkrechte Lage zu versetzen. Sind mehrere Stempelwägezellen, zum Beispiel in einer Waagenbrücke, zusammen angeordnet, dann sind die einzelnen Stempelwägezellen mechanisch nicht mehr völlig frei, da sie miteinander gekoppelt sind und sich so gegenseitig beeinflussen. Die einzelnen Rückstellkräfte der Stempelwägezellen wirken gesamthaft auf die Anordnung, was eine Minimierung der mechanischen Energie des Gesamtsystems zur Folge hat. Die individuellen Stempelwägezellen jedoch können schräg gestellt sein.

Eine Stempelwägezelle misst nur dann die auf sie wirkende Gewichtskraft korrekt, wenn die gesamte Anordnung bestehend aus dem Verformungskörper und dem oberen und unteren Krafteinleitungselement zwei Bedingungen erfüllt. Erstens müssen Verformungskörper und die beiden ebenen Krafteinleitungselemente entlang einer gemeinsamen Achse ausgerichtet sein, d.h. die beiden Krafteinleitungselemente sind parallel zu einander und die Längsachse des Verformungskörpers ist parallel zur Oberflächennormalen der Krafteinleitungselemente. Als zweite Bedingung muss die Richtung der Schwerkraft mit der gemeinsamen Achse der Anordnung zusammenfallen. Sind beide Bedingungen erfüllt, hat die Stempelwägezelle eine Idealausrichtung. Die Idealausrichtung einer Stempelwägezelle ist wichtig für die genaue Bestimmung der zu messenden Gewichtskraft einer Last.

Bei gravimetrischen Messinstrumenten, so auch Anlagen mit Stempelwägezellen, wird die Gewichtskraft bestimmt, welche der Masse des aufgebrachten Produkts entspricht. Die Gewichtskraft $F_G$, oder auch Schwerkraft $G$ genannt, ist das Produkt aus der Masse $m$ eines Körpers und der örtlichen Schwere $g$. Bei einer angenommenen mittleren Schwere von $g = 9.81$ $[m/s^2]$ (resp. $[N/kg]$) übt ein Körper mit der Masse von $m = 1$ $[kg]$ eine Gewichtskraft von $F_G = m{*}g = 9.81$ $[N]$ auf seine Unterlage aus. Durch die obige Definition ist die Gewichtskraft immer an die Richtung der Schwere $g$ gebunden, und von der lokal wirksamen Schwere am Aufstellungsort abhängig.

Die erste Bedingung lässt sich auch so beschreiben, dass die Verbindungslinie zwischen den beiden aktuellen Kontaktpunkten des Verformungskörpers und den Krafteinleitungselementen mit der Längsachse des Verformungskörpers zusammenfällt. Diese Situation heisst im folgenden Idealanordnung. Die gemeinsame Achse der Anordnung in Idealanordnung kann aber von der Richtung der Schwerkraft abweichen. Diese Abweichung hat zwei Freiheitsgrade in Richtung senkrecht zur Schwerkraft, welche durch zwei Winkel in jeweils zueinander orthogonalen Richtungen beschrieben werden können.

Eine Abweichung von der Idealanordnung, welche durch eine Abweichung der Verbindungslinie zwischen den oberen und unteren Kontaktpunkten von der Längsachse des Verformungskörpers beschrieben werden kann, hat hingegen vier Freiheitsgrade. Diese Freiheitsgrade entsprechen vier Transformationen um die Verbindunglinie mit der Längsachse des Verformungskörpers in Deckung zu bringen. Dazu werden im Allgemeinen zwei Drehungen, um jeweils zueinander orthogonale Richtungen benötigt, nach welchen die Verbindungslinie parallel zur Längsachse ist und anschliessend seitliche Verschiebungen in zwei zueinander orthogonale Richtungen, welche die beiden Achsen zur Deckung bringen.

Eine Stempelwägezelle aufweisend einen Verformungskörper und zwei Krafteinleitungselemente kann nach Einbau und im Betrieb der Stempelwägezelle von der Idealausrichtung abweichen. Die Abweichung hat insgesamt 6 Freiheitsgrade, denn jedes Krafteinleitungselement und der Verformungskörper können jeweils in zwei zueinander orthogonale Richtungen um einen Winkel geneigt sein. Dieselbe Anzahl von Freiheitsgraden ergibt sich, wenn die Freiheitsgrade für die Abweichung von der Idealanordnung, nämlich vier, zu den Freiheitsgraden für die Abweichung der gemeinsamen Achse der Idealanordnung von der Idealausrichtung, nämlich zwei Winkelfreiheitsgrade, addiert werden.

Eine Fehlstellung der Stempelwägezelle ist grundsätzlich die Abweichung dieser aus der Idealausrichtung. Abweichend von der Idealausrichtung kann zum einen der Verformungskörper selbst schräggestellt sein, d.h. die Mittelachse des Verformungskörpers verläuft nicht parallel zur Richtung der Schwerkraft, jedoch verbleiben die stempelwägezellenzugewandten Seiten der Krafteinleitungselemente senkrecht zur Richtung der Schwerkraft. Zum anderen können die Krafteinleitungselemente verkippt sein, d.h. zu einander nicht parallel ausgerichtet sein. Dennoch kann die Mittellängsachse des Verformungskörpers parallel zur Richtung der Schwerkraft verlaufen. Die gesamte Komplexität der Fehlstellung erhöht sich wenn beide Abweichungen von der Idealausrichtung, also Schrägstellung des Verformungskörpers und Verkippung der Krafteinleitungselemente, zeitgleich auftreten. Aus Betrachtungen der technischen Mechanik besitzt das Gesamtsystem sechs Freiheitsgrade.

Eine Fehlstellung kann durch verschiedene Ursachen hervorgerufen werden. Geht man davon aus, dass eine Stempelwägezelle in der Idealausrichtung eingebaut wurde, kann eine Schrägstellung des Verformungskörpers zum Beispiel durch eine thermische Expansion der Waagenbrücke hervorgerufen werden und eine Verkippung der Krafteinleitungselemente zum Beispiel durch eine Durchbiegung der Waagenbrücke. Es kann aber auch schon beim ungenauen Einbau der Stempelwägezelle in die Wägeanlage eine Verkippung und/oder eine Schrägstellung auftreten.

Die Fehlstellung einer Stempelwägezelle hat einen Messfehler zur Folge, der insbesondere von der Geometrie der Stempelwägezelle selbst, d.h. ihrer Höhe, den Radien an den beiden Enden und dem Durchmesser abhängt. Der Messfehler ist im Allgemeinen recht gross und kann einige tausend ppm (parts per million) des Messsignals bei Volllast betragen.

Die bei Fehlstellung entstehenden Messfehler können in zwei Fehlertypen unterteilt werden. Üblicherweise sind Stempelwägezellen einschliesslich der Krafteinleitungselemente und etwaig daran angebrachter Messsensoren bzw. Bestimmungsmittel rotationssymmetrisch unter 90°-Drehungen der Stempelwägezelle um ihre Mittelachse.

Der erste Fehlertyp wird durch eine Abweichung von dieser Rotationssymmetrie verursacht. Der Messfehler des ersten Fehlertyps ist daher eine antisymmetrische Funktion des Verkippungs- und/oder des Schrägstellungswinkels, d.h. ein Vorzeichenwechsel des Verkippungs- und/oder des Schrägstellungswinkels führt auch zu einem Vorzeichenwechsel des dazugehörigen Messfehlers. In anderen Worten, der Messfehler ist im Wesentlichen eine lineare Funktion des Verkippungs- bzw.des Schrägstellungswinkels. Dieser Messfehler wird häufig auch als Eckenlastfehler bezeichnet und kann entweder durch Wiederherstellung der Rotationssymmetrie oder durch eine Schleifoperation an der Stempelwägezelle zum Verschwinden gebracht werden.

Der zweite Fehlertyp existiert auch bei vollständiger Rotationssymmetrie und ist durch die Geometrie der Stempelwägezelle gegeben. Dieser Messfehler ist aufgrund der geometrischen Symmetrie eine symmetrische Funktion des Verkippungs- und/oder des Schrägstellungswinkels, d.h. der Messfehler ist unabhängig vom Vorzeichen des Verkippungs- bzw. des Schrägstellungswinkels.

Neue Richtlinien fordern ständig qualitativ präzisere Messresultate und somit eine immer bessere Erkennung und Korrektur von Messfehlern. Um die gesamte Komplexität der Fehlstellung zu erfassen, ist eine Vielzahl von Messsensoren notwendig. Oder anders gesagt müssen, um eine geeignete Kompensation zu realisieren, so viele unabhängige Messwerte erfasst werden wie Freiheitsgrade vorhanden sind. Die Anzahl der Freiheitsgrade bestimmt also die Anzahl notwendiger Messsensoren.

Um die Komplexität der Fehlstellung bzw. die Anzahl der Freiheitsgrade zu verringern kann näherungsweise angenommen werden, dass das mit dem Untergrund in Kontakt stehende Krafteinleitungselement horizontal und feststehend ist. Somit reduziert sich die Gesamtzahl der Freiheitsgrade auf vier.

Eine Stempelwägezelle mit Bestimmungsmitteln ist beispielsweise aus JP 4 408 518 B2 bekannt. Diese Stempelwägezelle misst die Lastkraft mittels Dehnmessstreifen (DMS), welche auf dem Verformungskörper in Längsrichtung zur Mittelachse angebracht sind. Dieselbe Stempelwägezelle besitzt zur Bestimmung der Schrägstellung des Verformungskörpers einen Neigungssensor, welcher fähig ist, den Auslenkwinkel zur Senkrechten zu bestimmen. Die Neigung wird mittels Kontaktflächen und einer, in einem Ring eingeschlossenen dielektrischen Flüssigkeit ermittelt. Nachteilig dabei ist die Verwendung des separaten, kostenaufwändigen Neigungssensors zusätzlich zu den am Verformungskörper angebrachten Dehnmessstreifen. Ebenso nachteilig ist, dass die offenbarte Stempelwägezelle keine Unterscheidung zwischen den verschiedenen Fehlstellungen machen kann. Ist die Mittellängsachse des Verformungskörpers in Richtung der Schwerkraft ausgerichtet so wird eine allfällige Fehlstellung der Krafteinleitungselemente für die Berechnung des Wägeresultats nicht berücksichtigt. Zudem ist dieser Sensor störungsanfällig, verteuert die Stempelwägezelle für den Endnutzer, und besitzt keine Kompensation einer Langzeitdrift des Neigungssensors. Dies bedeutet, dass eine Messwertdrift des Neigungssensors nicht erkannt werden kann und somit eine periodische Kontrolle der Stempelwägezelle nötig wird.

Eine zu oben genannter Vorrichtung ähnliche Stempelwägezelle offenbart die JP 2010 133 785 A. Die hier beschriebene Stempelwägezelle misst die Lastkraft mittels je zwei DMS-Paaren, welche jeweils einen Dehnmessstreifen in Längs- und einen in Querrichtung zur Mittellängsachse aufweisen. Dieselbe Stempelwägezelle besitzt zur Bestimmung der Schrägstellung des Verformungskörpers ebenfalls einen Neigungssensor, ähnlich wie in oben beschriebener Vorrichtung, welcher durch eine Verbesserung fähig ist, nicht nur den Auslenkwinkel zur Senkrechten zu bestimmen, sondern auch dessen Richtung. Auch hier ist nachteilig, dass die Verwendung des separaten Neigungsmessers zusätzlich zu den Dehnmessstreifen nötig ist. Die erfassten Signale aus den Dehnmessstreifen und dem Sensor reichen jedoch nicht aus um eine Kompensation des Lastkraftsignals vorzunehmen, in der alle Freiheitsgrade der Fehlstellung von Stempelwägezelle und Krafteinleitungselement berücksichtigt werden. Ebenfalls fehlt eine Kompensation der Langzeitdrift des Neigungssensors. Diese Vorrichtung verbessert also das Messresultat gegenüber der ersterwähnten Vorrichtung, weist aber auch dieselben Nachteile auf, da das gleiche Prinzip für die Fehlstellungssmessung der Stempelwägezelle verwendet wird.

Weiter offenbart EP 1 486 762 A2 eine Stempelwägezelle mit Mitteln zur Kompensation des Eckenlastfehlers, welcher von der Imperfektion der Stempelwägezelle herrührt. Zum Beispiel können die Dehnmessstreifen unterschiedliche Empfindlichkeiten und/oder Widerstände haben, oder die Geometrie des Verformungskörpers ist nicht vollständig symmetrisch. In einer Brückenschaltung werden mit zusätzlichen Abgleichwiderständen ungleiche Signale in den Brückenschaltungsarmen kompensiert. Diese Methode kompensiert nur den linearen Messfehler, der durch eine Abweichung von der Rotationssymmetrie entsteht.

In JP 2007 033 127 A wird ein säulenförmiges Belastungselement, zum Beispiel für eine Waagenbrücke für Lastkraftwagen, offenbart. Ähnlich zu der in JP 2010 133 785 A offenbarten Vorrichtung besitzt auch diese mehrere Dehnmessstreifen um neben der Verformung, hervorgerufen durch die Last, auch Verformungen, entstehend durch eine Fehlstellung, zu messen. Anders als in der Vorrichtung aus JP 2010 133 785 A wird jedoch die Fehlstellung ebenfalls mittels Dehnmessstreifen ermittelt. Zwei sich auf der Mantelfläche des Verformungskörpers gegenüberliegende Dehnmessstreifen bilden jeweils ein Paar und werden bei einer Fehlstellungsverformung unterschiedlich gestaucht, beziehungsweise gedehnt. In einer Differenzschaltung der beiden Dehnmessstreifen eines Paares kann eine Biegebeanspruchung ermittelt werden. Mit zwei zusätzlichen, um 90° um die Mittellängsachse als Drehachse gedrehten Paaren Dehnmessstreifen sind zwei Freiheitsgrade von Fehlstellungen berechenbar. Aus drei Wheatstoneschen Brückenschaltungen, eine für die Lastverformung, und je eine für die Fehlstellungsverformung in zwei zueinander orthogonalen Richtungen, wird schlussendlich das Messresultat berechnet. Für die Anwendung der oben beschriebenen Vorrichtung sind vier Dehnmessstreifen für die Ermittlung der Fehlstellung am Belastungselement angeordnet. Diese erfordern einen Mehraufwand in der Herstellung der Stempelwägezelle, insbesondere das Positionieren der Dehnmessstreifen auf der Mantelfläche des Verformungskörpers. Trotz der hohen Anzahl an Dehnmessstreifen können mittels dieser Anordnung, und in Kombination mit den Dehnmessstreifen für die Lastverformung, nur zwei Freiheitsgrade bestimmt werden, was zu wenig ist, um zu erkennen ob der Verformungskörper schräg steht und/oder ob die Krafteinleitungselemente nicht parallel zu einander sind.

In einer weiteren Schrift, JP 2010 210 357, ist erwähnt, dass ein Dehnmessstreifen in Richtung der Nullspannung angebracht wird. Dies wird allein dazu verwendet eine Temperaturkompensation vor Ort zu erreichen indem dieser belastungsunabhängige Widerstand in eine Brückenschaltung eingebaut wird. Die Richtung in welcher der Dehnmessstreifen aufgebracht wird, beziehungsweise der Winkel zur ersten Hauptspannung wird hergeleitet aus der materialabhängigen Poissonzahl. Diese Erfindung beinhaltet keine Lösung zur Kompensation einer Fehlstellung der Stempelwägezelle.

Die EP 0 209 400 A2 offenbart eine Vorrichtung zur Erzeugung von elektrischen Messsignalen, hervorgerufen von angelegten Kräften in sechs Freiheitsgraden, für ein Steuergerät, auch bekannt als Joystick. Ein solches Steuergerät besitzt üblicherweise einen Stab, welcher die angelegten Kräfte aufnimmt. Der Stab ist an einem Ende fest fixiert, z.B. mit einer Grundplatte, damit dieser aufgrund der angelegten Kräfte verbogen, verdreht, gestreckt und/oder gestaucht werden kann.

Von der gleichen Art ist die Vorrichtung aus US 7 188 535 B1. Darin wird ein Kraftaufnehmer zum Messen von mehrdimensionalen Kraftzuständen beschrieben, welcher Dehnmessstreifen auf einem Deformationskörper aufweist, welche in einem willkürlich gewählten Winkel in Bezug zur Mantellinie ausgerichtet sind. Dies deshalb, damit die einzelnen Dehnmessstreifen nicht linear abhängig von einander sind. Der Kraftaufnehmer ist erst einsatzfähig wenn diese Kalibriert wurde und den für diesen einen Kraftaufnehmer gültige Empfindlichkeitsmatrix erstellt wurde.

Eine Stempelwägezelle unterscheidet sich von einem mehrachsigen Kraftaufnehmer darin, dass nur eine Kraftkomponente in einer Richtung - nämlich in Richtung der Schwere g - bestimmt wird. Weitere Kräfte und Momente entlang anderer Richtungen sind nicht relevant für die eigentliche Aufgabe der Stempelwägezelle, nämlich die Gewichtskraft zu bestimmen.

Ausgehend von diesem Stand der Technik liegt der Erfindung die Aufgabe zu Grunde, eine robuste und genauere Stempelwägezelle mit Fehlstellungskompensation zur Verfügung zu stellen. Im Weiteren soll die Fehlstellung möglichst gesamthaft erfasst werden, das heisst mehr als zwei Freiheitsgrade in der Fehlstellung zu erfassen, und eine solche Stempelwägezelle hinsichtlich einer Messwertdrift zu verbessern.

Eine weitere Aufgabe besteht darin die Fehlstellungskompensation mit einfachen Mitteln zu realisieren. Dabei sollen aber auch die Material- und Produktionskosten der Stempelwägezelle tief gehalten werden.

Die Aufgaben werden dadurch gelöst, dass die Stempelwägezelle einen Verformungskörper mit einer oberen und einer unteren Kontaktfläche aufweist. Die Kontaktflächen sind für die Krafteinleitung in den Verformungskörper entsprechend mit einer Kugeloberfläche ausgestaltet und weisen dabei je einen Auflagepunkt auf, wobei die aktuellen Auflagepunkte zusammen eine Kraftbezugslinie bilden. Zwischen den Kontaktflächen ist ein säulenförmiger Bereich des Verformungskörpers angeordnet, welcher eine Mittellängsachse und eine zu dieser parallele Mantellinie aufweist. Weiter umfasst die Stempelwägezelle ein erstes Bestimmungsmittel, welches auf dem säulenförmigen Bereich des Verformungskörpers angebracht ist und die mechanische Verformung des Verformungskörpers in ein elektronisches Signal wandelt, und ein zweites Bestimmungsmittel, welches auf dem säulenförmigen Bereich des Verformungskörpers angebracht ist, und eine Abweichung der Mittellängsachse zur Kraftbezugslinie in ein entsprechendes Signal wandelt. Dabei weisen das erste Bestimmungsmittel und das zweite Bestimmungsmittel jeweils mindestens einen Dehnmesssensor auf. Zugleich ist der mindestens eine Dehnmesssensor des zweiten Bestimmungsmittels im Wesentlichen mittig zwischen der oberen und unteren Kontaktfläche angebracht und dabei um einen vordefinierten, spitzen Winkel in Bezug zur Mantellinie, derart ausgerichtet, dass das Signal des zweiten Bestimmungsmittels bei fehlender Abweichung der Mittellängsachse zur Kraftbezugslinie Null wird, und damit lastunabhängig wird.

Die Wandlung der mechanischen Verformung in ein elektronisches Signal durch das erste Bestimmungsmittel erfolgt entsprechend der Grösse der mechanischen Verformung des Verformungskörpers, d.h. je grösser die mechanische Verformung ist, desto grösser ist das elektronische Signal. Aus diesem elektronischen Signal lässt sich demnach nicht nur eine qualitative Messung machen (Vorhandensein einer mechanischen Verformung), sondern auch eine quantitative Messung (Grösse der mechanischen Verformung) durchführen, welche das Ausmass der mechanischen Verformung des Verformungskörpers wiedergibt. Ebenso ist die Wandlung der Abweichung der Mittellängsachse zur Kraftbezugslinie in ein elektronisches Signal bestimmt durch das zweite Bestimmungsmittel entsprechend der Grösse dieser Abweichung. Mit dem zweiten Bestimmungsmittel ist es also auch möglich eine quantitative Messung zu machen und so die Abweichung der Mittellängsachse zur Kraftbezugslinie nicht nur zu erfassen, sondern auch deren Grösse zu bestimmen.

Die Unterscheidung in ein erstes Bestimmungsmittel und ein zweites Bestimmungsmittel liegt in der Art der Information des elektrischen Signals. Genauer gesagt liefert das erste Bestimmungsmittel die Hauptinformation, nämlich die Verformung des Verformungskörpers entlang der Mittellängsachse. Mit dem zweiten Bestimmungsmittel wird eine Information bezüglich einer Fehlstellung, also eine Zusatzinformation, bestimmt.

Die Idealanordnung der Stempelwägezelle wird geometrisch definiert als das Zusammenfallen der Richtung der eingeleiteten Kraft mit der Mittellängsachse des Verformungskörpers, das heisst es überlagern sich die Kraftbezugslinie und die Mittellängsachse. Es entsteht dabei keine Biege- oder Scherbeanspruchung am säulenförmigen Bereich des Verformungskörpers und das Messsignal kann ohne Kompensation für das Messresultat verwendet werden.

Ein im Wesentlichen mittig zwischen der oberen und unteren Kontaktfläche angebrachter und dabei um einen vordefinierten, spitzen Winkel in Bezug zur Mantellinie ausgerichteter Dehnmesssensor ist maximal empfindlich für die Erfassung der Schrägstellung der Stempelwägezelle. Ein weiterer Vorteil ist die Tarierung des Messsignals in der Idealanordnung, gegebenenfalls Idealausrichtung, welche im weiteren Betrieb auch einer Überwachung einer Drift des ersten Bestimmungsmittels dienen kann. Aus dieser Überwachung kann beispielsweise auch eine Kompensation eines Messwertdrifts erfolgen. Dies geschieht zum Beispiel durch ein Nullen von Zeit zu Zeit im entlasteten Zustand. Da in der Praxis eine solche Stempelwägezelle in der Regel nicht vollständig entlastet wird, kann daher ein Nullen nur durchgeführt werden, wenn ein bestimmter Schwellenwert unterschritten wird.

Als Dehnmesssensoren werden üblicherweise resistive Dehnungsmessstreifen in Metallfolientechnik verwendet. Auch Dehnungsmessstreifen in Dünnschichttechnik und in Dickschichttechnik sind bekannt. Des Weiteren können Dehnmesssensoren basierend auf optischen Prinzipien und/oder akustischen Oberflächenwellen verwendet werden.

Eine vorteilhafte Weiterbildung der Erfindung sieht vor, dass der vordefinierte, spitze Winkel vom verwendeten Werkstoff des säulenförmigen Bereiches des Verformungskörpers, insbesondere von der Poissonzahl des Werkstoffes, abhängig ist.

In einer weiteren vorteilhaften Ausgestaltung liegt der vordefinierte, spitze Winkel im Bereich von 54 - 72°, abhängig vom verwendeten Material des säulenförmigen Bereiches des Verformungskörpers. Zum Beispiel liegt für Verformungskörper aus dem dafür üblicherweise verwendetem Stahl der vordefinierte, spitze Winkel bei 61,3°.

Eine Weiterbildung der Erfindung sieht vor, dass das erste Bestimmungsmittel und das zweite Bestimmungsmittel an der Mantelfläche des säulenförmigen Bereichs, in Wesentlichen mittig zwischen den Kontaktflächen, angebracht sind. Durch die Einleitung der Kraft in den Verformungskörper durch Punktauflagen ist die Spannungsverteilung im Verformungskörper der Stempelwägezelle inhomogen. Die mittige Anordnung trägt dieser Tatsache Rechnung, indem die Dehnmesssensoren an jenem Querschnitt des säulenförmigen Bereiches angebracht sind, wo die Spannungsverteilung am gleichmässigsten ist, also mit grösstmöglicher Distanz von den Auflagepunkten entfernt. Das erste Bestimmungsmittel kann auch auf der gleichen Mantellinie ober- oder unterhalb des zweiten Bestimmungsmittels angeordnet sein, vorteilhafterweise jedoch möglichst mittig zwischen den Kontaktflächen. Ein Vorteil dieser Anordnung liegt darin, dass der Dehnmesssensor des ersten Bestimmungsmittels und des zweiten Bestimmungsmitteln auf der gleichen Grundträgerfolie aufgebracht werden können, in der Herstellung gemeinsam in einem Arbeitsgang platziert und ausgerichtet, und so Zeitaufwand und Kosten eingespart werden können.

Eine weitere Ausgestaltung der Erfindung sieht vor, dass das erste Bestimmungsmittel und/oder das zweite Bestimmungsmittel jeweils mindestens zwei einander in Bezug zur Mittellängsachse gegenüberliegende Dehnmesssensoren oder Dehnmesssensorpaare aufweisen/aufweist. Diese gegenüberliegenden Dehnmesssensoren werden zur Signalauswertung in einer Wheatstoneschen Brückenschaltung so angeordnet, dass diese das Resultat der Signalauswertung bezüglich der mechanischen Verformung des Verformungskörpers in Richtung der Mittellängsachse und/oder das Resultat der Signalauswertung bezüglich einer Abweichung der Mittellängsachse zur Kraftbezugslinie verstärkt wiedergeben.

Eine vorteilhafte Ausgestaltung der Erfindung sieht vor, dass zwei Dehnmesssensoren oder Dehnmesssensorpaare des ersten Bestimmungsmittels und/oder zwei Dehnmesssensoren des zweiten Bestimmungsmittels um einen Winkel, insbesondere einem Winkel vom 90°, um die Mittellängsachse als Drehachse gedreht, jeweils auf der Mantelfläche, angeordnet sind. Im Falle des ersten Bestimmungsmittels ermöglicht diese Anordnung eine verbesserte Bestimmung der mechanischen Verformung des Verformungskörpers und im Falle des zweiten Bestimmungsmittels, die Bestimmung der Fehlstellung, insbesondere der Schrägstellung des Verformungskörpers in alle Raumrichtungen.

Eine weitere vorteilhafte Ausgestaltung der Erfindung sieht vor, dass die mindestens zwei Dehnmesssensoren des zweiten Bestimmungsmittels jeweils zwischen den Dehnmesssensoren des ersten Bestimmungsmittels, insbesondere mittig, und zueinander um 90° um die Mittellängsachse als Drehachse gedreht, angeordnet sind. Diese Ausgestaltung ermöglicht die Anordnung aller Dehnmesssensoren auf der gleichen Umfangslinie der Mantelfläche.

Eine weitere Ausgestaltung der Erfindung sieht vor, dass das zweite Bestimmungsmittel zwei im vordefinierten, spitzen Winkel angeordnete Dehnmesssensoren und vier weitere Dehnmesssensoren, welche parallel zur Mittellängsachse ausgerichtet sind und jeweils paarweise am Verformungskörper einander gegenüberliegend angebracht sind, aufweist, wobei die im vordefinierten, spitzen Winkel angeordneten Dehnmesssensoren und die beiden Paare von Dehnmesssensoren zueinander jeweils um 90° um die Mittellängsachse als Drehachse gedreht sind.

In einer bevorzugten Ausführungsform der Erfindung weist der säulenförmige Bereich des Verformungskörpers entlang seiner Mittellängsachse mindestens zwei Durchmesser auf, insbesondere eine hantelförmige Form hat. Zum Beispiel wird für geringere Lasten der Durchmesser im Bereich der Bestimmungsmittel verringert. Dies erhöht die Materialspannung im Querschnitt des verringerten Durchmessers des säulenförmigen Bereiches, und es findet eine grössere Verformung des säulenförmigen Bereiches statt. Die grössere Verformung bewirkt wiederum ein stärkeres Signal der Bestimmungsmittel, und somit ist die Stempelwägezelle an die einwirkende Kraft angepasst.

In einer weiteren vorteilhaften Ausgestaltung weist die Stempelwägezelle eine typenspezifische oder gerätespezifische Kalibrierung auf. Bei einer typenspezifischen Kalibrierung werden dieselben Parameterwerte in den Speicher einer Verarbeitungseinheit der Stempelwägezelle geschrieben, sofern diese Stempelwägezellen vom gleichen Typ oder der gleichen Modellreihe sind. Die verwendeten Parameterwerte werden dabei aus dem Mittelwert von wenigen Stichprobenmessungen ermittelt, und auf alle anderen Stempelwägezellen übertragen. Dies reduziert den Aufwand in der Produktion und senkt die Herstellungskosten. Die gerätespezifische Kalibrierung wird dann vorgenommen, wenn die Stempelwägezelle einen erhöhten Genauigkeitsstandart erfüllen muss. Es werden dann die individuellen Parameterwerte für jede einzelne Stempelwägezelle ermittelt.

In einer Waage, insbesondere einer Fahrzeugwaage, Tankwaage oder Behälterwaage, wird mindestens eine Stempelwägezelle verwendet. Die mindestens eine Stempelwägezelle weist ein erstes Bestimmungsmittel auf, welches die mechanische Verformung des Verformungskörpers in ein Signal umwandelt, und ein zweites Bestimmungsmittel, welches eine Abweichung der Mittelachse zur Kraftbezugslinie in ein entsprechendes Signal umwandelt. Dabei weist das erste Bestimmungsmittel und das zweite Bestimmungsmittel jeweils mindestens einen Dehnmesssensoren auf, wobei der mindestens eine der Dehnmesssensoren im Wesentlichen mittig zwischen der oberen Kontaktfläche und unteren Kontaktfläche angebracht ist und dabei um einen vordefinierten, spitzen Winkel in Bezug zur Mantellinie derart ausgerichtet ist, dass das Signal des zweiten Bestimmungsmittels bei fehlender Abweichung der Mittellinie zur Kraftbezugslinie Null wird, d.h. lastunabhängig wird.

In einem Verfahren zur Fehlstellungskompensation einer Stempelwägezelle weist die Stempelwägezelle einen Verformungskörper mit einer oberen und einer unteren Kontaktfläche auf. Die Kontaktflächen sind für die Krafteinleitung in den Verformungskörper entsprechend mit einer Kugeloberfläche ausgestaltet und weisen dabei je einen Auflagepunkt auf, wobei die aktuellen Auflagepunkte zusammen eine Kraftbezugslinie bilden. Zwischen den Kontaktflächen ist ein säulenförmiger Bereich des Verformungskörpers angeordnet, welcher eine Mittellängsachse und eine zu dieser parallele Mantellinie aufweist. Weiter umfasst die Stempelwägezelle ein erstes Bestimmungsmittel und ein zweites Bestimmungsmittel, wobei das erste Bestimmungsmittel und das zweite Bestimmungsmittel jeweils mindestens einen Dehnmesssensor aufweisen. Das Verfahren ist gekennzeichnet durch die folgenden Schritte, dass mindestens ein Dehnmesssensor als erstes Bestimmungsmittel, welcher derart an der Mantelfläche des säulenförmigen Bereichs des Verformungskörpers angebracht ist, dass die mechanische Verformung des Verformungskörpers in ein Signal des ersten Bestimmungsmittels gewandelt wird, zur Verfügung gestellt wird und mindestens ein Dehnmesssensor als zweites Bestimmungsmittel, welcher derart an der Mantelfläche des säulenförmigen Bereichs des Verformungskörpers angebracht ist, dass eine Abweichung der Mittellängsachse zur Kraftbezugslinie in ein Signal des zweiten Bestimmungsmittels gewandelt wird, zur Verfügung gestellt wird, wobei der mindestens eine der Dehnmesssensoren im Wesentlichen mittig zwischen der oberen Kontaktfläche und unteren Kontaktfläche angebracht ist und dabei um einen vordefinierten, spitzen Winkel in Bezug zur Mantellinie derart ausgerichtet ist, dass das Signal des zweiten Bestimmungsmittels bei fehlender Abweichung der Mittellängsachse zur Kraftbezugslinie Null wird. In einem weiteren Schritt wird das Signal des mindestens einen Dehnmesssensors des ersten Bestimmungsmittels ermittelt, und anschliessend oder zeitgleich das Signal des mindestens einen um den vordefinierten, spitzen Winkel in Bezug zur Mantellinie ausgerichteten Dehnmesssensors des zweiten Bestimmungsmittels ermittelt. Es folgt eine Bestimmung von Kompensationswerten bezüglich einer Fehlstellung der Stempelwägezelle, wobei mindestens das Signal des zweiten Bestimmungsmittels verwendet wird. In einem nächsten Schritt wird das Wägeresultat aus dem Signal des ersten Bestimmungsmittels, des zweiten Bestimmungsmittels und den Kompensationswerten berechnet.

In einem weiteren Verfahren erfolgt die Ermittlung der Kompensationswerte durch eine Unterscheidung zwischen parallel verschobenen Krafteinleitungselementen, verkippten Krafteinleitungselementen, und parallel verschobenen und verkippten Krafteinleitungselementen. Oder anders gesagt wird bei der Ermittlung der Kompensationswerte zwischen schräggestelltem Verformungskörper, verkippten Krafteinleitungselementen, und schräggestelltem Verformungskörper und verkippten Krafteinleitungselementen unterschieden.

In einem weiteren Verfahren können die Signale der Dehnmesssensoren des ersten Bestimmungsmittels und/oder des zweiten Bestimmungsmittels in einer Verarbeitungseinheit einzeln und/oder paarweise ermittelt werden. Der Verarbeitungseinheit der Stempelwägezelle kann so der maximale Informationsgehalt aus den Signalen der Dehnmesssensoren zur Verfügung gestellt werden um die bestmögliche Kompensation einer Fehlstellung vorzunehmen.

Ein weiteres Verfahren sieht vor, dass das Ermitteln der einzelnen Signale des ersten Bestimmungsmittels und/oder des zweiten Bestimmungsmittels in der Verarbeitungseinheit zeitlich seriell erfolgt. Zum Beispiel in mindestens einer Brückenschaltung. So kann die Anzahl der Brückenschaltungen in einer Stempelwägezelle tief gehalten werden. Die Signale werden dabei mittels einer zusätzlichen Schaltung einzeln und zeitlich seriell der mindestens einen Brückenschaltung zugeschaltet.

Einzelheiten der erfindungsgemässen Stempelwägezelle und des erfindungsgemässen Verfahrens zur Schrägstellungskompensation ergeben sich anhand der Beschreibung der in den Zeichnungen dargestellten Ausführungsbeispiele.

Im Folgenden wird der Erfindungsgegenstand anhand von bevorzugten Ausführungsbeispielen, welche in den beiliegenden Zeichnung(en) dargestellt sind erläutert. Es zeigen:

Fig. 1      Eine Vorderansicht der Stempelwägezelle in Idealausrichtung mit erstem Bestimmungsmittel und mit einem schräg angebrachten zweiten Bestimmungsmittel auf gleicher Umfangslinie;

Fig. 2      Eine Vorderansicht der Stempelwägezelle in Idealanordnung mit erstem Bestimmungsmittel und mit einem schräg angebrachten zweiten Bestimmungsmittel auf gleicher Umfangslinie;

Fig. 3      Eine Schnittansicht der Stempelwägezelle aus Fig. 1 an der Stelle A-A mit erstem Bestimmungsmittel und mit einem schräg angebrachten zweiten Bestimmungsmittel auf gleicher Umfangslinie;

Fig. 4      Eine Aufsicht der Stempelwägezelle aus Fig. 3 in Blickrichtung B mit erstem Bestimmungsmittel und mit einem schräg angebrachten zweiten Bestimmungsmittel auf gleicher Umfangslinie;

Fig. 5      Eine Vorderansicht der Stempelwägezelle in Idealausrichtung mit erstem Bestimmungsmittel auf gleicher Mantellinie unterhalb des schräg angebrachten zweiten Bestimmungsmittels;

Fig. 6      Eine Schnittansicht der Stempelwägezelle aus Fig. 5 an der Stelle C-C mit erstem Bestimmungsmittel auf gleicher Mantellinie unterhalb des schräg angebrachten zweiten Bestimmungsmittels;

Fig. 7      Eine Vorderansicht der schräggestellten Stempelwägezelle aus Fig. 1 mit erstem Bestimmungsmittel und mit einem schräg angebrachten zweiten Bestimmungsmittel bei schräggestelltem Verformungskörper;

Fig. 8      Eine Vorderansicht der Stempelwägezelle aus Fig. 1 mit erstem Bestimmungsmittel und mit einem schräg angebrachten zweiten Bestimmungsmittel mit verkipptem oberem Krafteinleitungselement;

Fig. 9      Eine Vorderansicht der Stempelwägezelle aus Fig. 1 mit erstem Bestimmungsmittel und mit einem schräg angebrachten zweiten Bestimmungsmittel mit zwei verkippten Krafteinleitungselementen;

Fig. 10   Eine Vorderansicht der Stempelwägezelle mit erstem Bestimmungsmittel und mit einem schräg angebrachten zweiten Bestimmungsmittel bei verkippten Krafteinleitungselementen und schräggestelltem Verformungskörper;

Fig. 11   Eine Anordnung mehrerer Stempelwägezellen an einer Waagenbrücke;

Fig. 12   Einen seitlichen Querschnitt durch eine Fahrzeugwaage.

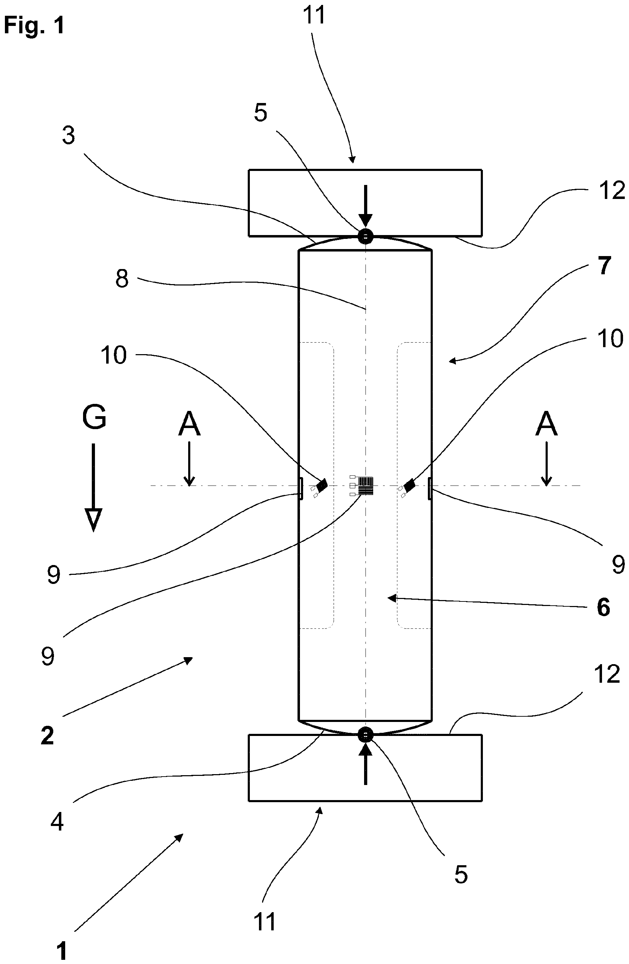

Figur 1 zeigt im Aufriss eine Stempelwägezelle 1 mit einem Verformungskörper 2 zwischen zwei Krafteinleitungselementen 11 in der Idealausrichtung. Der Verformungskörper 2 und die Krafteinleitungselemente 11 berühren sich an je einem Auflagepunkt 5, da die obere Kontaktfläche 3 und die untere Kontaktfläche 4 einer Kugeloberfläche entsprechen. Über die Krafteinleitungselemente 11 wird die Gewichtskraft eines Wägekörpers, hier durch zwei Pfeile dargestellt, auf den Verformungskörper 2 übertragen. Durch die zweifache Punktauflage an den Auflagepunkten 5 kann die applizierte Gewichtskraft nur entlang der Kraftbezugslinie 6, welche durch die Auflagepunkte 5 definiert wird, wirken. Die besten Wägeresultate liefert eine Stempelwägezelle 1 in der Idealausrichtung, also wenn die Mittellängsachse 8 des säulenförmigen Bereichs 7 des Verformungskörper 2 in Richtung der Schwerkraft G gerichtet ist und die Flächennormalen der dem Verformungskörper 2 zugewandten Seiten 12 der Krafteinleitungselemente 11 parallel dazu sind, oder anders gesagt die Kraftbezugslinie 6 und die Mittellängsachse 8 des säulenförmigen Bereichs 7 des Verformungskörpers 2 deckungsgleich sind und in Richtung der Schwerkraft G ausgerichtet sind.

Um eine Stempelwägezelle 1 an den Wägebereich anzupassen weist der säulenförmige Bereich 7 des Verformungskörpers 2 entlang der Mittellängsachse 8 mindestens zwei Durchmesser auf. In Figur 1, durch eine dünne gepunktete Linie dargestellt, besitzt der säulenförmige Bereich 7 des Verformungskörpers 2 insbesondere eine hantelförmige Form. Eine Stempelwägezelle 1 einer bestimmten Baugrösse kann so spezifisch an das Wägevorhaben, beziehungsweise an den Wägebereich des Kunden angepasst werden.

Wird auf den Verformungskörper 2 eine Kraft eingeleitet so verformt sich dieser. Im Falle einer Stempelwägezelle, welche auf Druck beansprucht wird, wird der Verformungskörper 2 entlang der Mittellängsachse 8 gestaucht (zusammengepresst) und radial zur Mittellängsachse 8 gedehnt (ausgeweitet). Durch die Verformung tritt im Verformungskörper 2 entlang der Mittellängsachse 8 (erste Hauptrichtung) die Dehnung $\varepsilon_1$ auf, und in eine Richtung senkrecht zur Mittellängsachse 8 (zweite Hauptrichtung) die Dehnung $\varepsilon_2$. Die durch diese sogenannte Querkontraktion auftretende Dehnung $\varepsilon_2$ wird dabei als Querdehnung definiert. Die Poissonzahl

μ, eine Materialkonstante, beschreibt wie sich die Dehnung $\varepsilon_2$ zur Dehnung $\varepsilon_1$ verhält. Zwischen den Dehnung $\varepsilon_1$ und $\varepsilon_2$ und der Poissonzahl μ besteht im einachsigen Spannungszustand folgender Zusammenhang:

$$\varepsilon_2 = -\mu \cdot \varepsilon_1$$

Das negative Vorzeichen in der Gleichung zeigt, dass es sich dabei um jeweils eine Stauchung und eine reine Dehnung handelt. In der Auftragung der Dehnung $\varepsilon$ als Funktion des Winkels θ ausgehend von der ersten Hauptrichtung zur zweiten Hauptrichtung muss deshalb ein Nulldurchgang vorhanden sein, also durch den Winkel θ eine Richtung definiert sein, in welcher ein dehnungsfreier Zustand herrscht. Die dort auftretende Dehnung ist gleich Null. Dieser Winkel θ für den Nulldurchgang ist bestimmbar durch die Gleichung:

$$\varepsilon_0 = 0.5 \cdot \varepsilon_1 \cdot \left[1 - \mu + (1 + \mu) \cdot \cos(2 \cdot \theta)\right] = 0$$

Dabei ist θ der Winkel zwischen der Nulldehnungsrichtung und der ersten Hauptrichtung. Für eine Poissonzahl μ von 0.3 ergibt sich für θ ein Winkel von 61.3°. Die Richtung, in welcher ein dehnungsfreier Zustand herrscht, wird in der vorliegenden Beschreibung als die Nulldehnungsrichtung verstanden.

Die Dehnmesssensoren des ersten Bestimmungsmittels 9 sind auf der Mantelfläche des säulenförmigen Bereichs 7 des Verformungskörpers 2 entlang derselben Umfangslinie angeordnet, vorzugsweise dort wo der säulenförmige Bereich 7 des Verformungskörper 2 eine möglichst homogene Spannungsverteilung aufweist, das heisst im Wesentlichen möglichst mittig in Bezug auf die Kontaktflächen 3 und 4. Das in Figur 1 gezeigte erste Bestimmungsmittel 9 ist durch insgesamt acht Dehnmesssensoren als Paare an vier Anordnungsstellen gebildet, d.h. pro Anordnungsstelle sind zwei Dehnmesssensoren vorhanden, welche jeweils entweder eine Verformung in Richtung der Mittellängsachse 8 (erste Hauptrichtung) oder 90° quer zur Mittellängsachse 8 (zweite Hauptrichtung) in Signale umwandeln. Eine Verformungsmessung in 90° quer zur Richtung der Mittellängsachse 8 liefert ein zusätzliches Signal zu jenem Signal, welches in Richtung der Mittellängsachse 8 gemessen wird. Die Dehnmesssensoren erfahren durch die Verformung des Verformungskörpers 2 eine Längenänderung und ändern so ihren elektrischen Widerstand. Je nach Ausrichtung der Dehnmesssteifen, massgebend dafür sind deren Leitbahnen (auch Mäander genannt), sind diese in eine bestimmte - die Ihnen zugewiesene - Richtung empfindlich auf eine Verformung durch Längenänderung. Aufgrund der Änderung des elektrischen Widerstandes kann eine Verarbeitungseinheit (hier nicht gezeigt) die eingeleitete Kraft ermitteln, welche wiederum auf die Masse des Wägeguts schliessen lässt. Die Verformung des Verformungskörpers 2 nimmt, bei metallischem Werkstoff des Verformungskörpers 2, entsprechend linear zur aufgebrachten Kraft zu. Die Wandlung der Verformung in ein elektronisches Signal durch das erste Bestimmungsmittel 9 erfolgt also entsprechend der Grösse der Verformung, und ist somit eine quantitative Messung

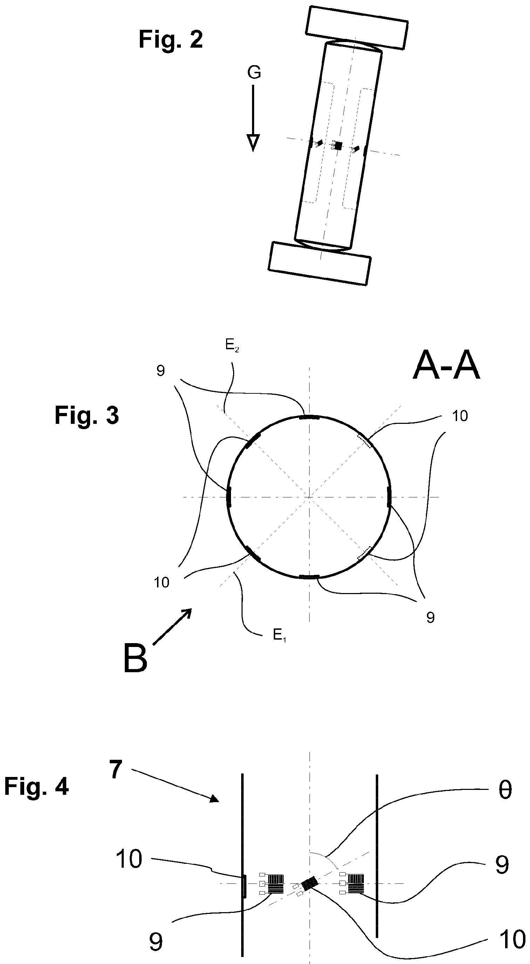

Das zweite Bestimmungsmittel 10 ist hier ebenfalls durch Dehnmesssensoren gebildet und in der Mitte, vorzugsweise mittig zwischen der oberen Kontaktfläche 3 und der unteren Kontaktfläche 4, angeordnet. Zudem sind die Dehnmesssensoren des zweiten Bestimmungsmittels 10, hier in Figur 1 deren zwei an der Zahl, um den vordefinierten, spitzen Winkel θ (in Figur 3 zu sehen) in Bezug zur Mittellängsachse 8 des säulenförmigen Bereichs 7 gedreht und wandeln entsprechend die mechanische Verformung des Verformungskörpers 2 entlang der der Nulldehnungsrichtung in ein Signal um. Fällt die Kraftbezugslinie 6 mit der Mittellängsachse 8 des säulenförmigen Bereichs 7 des Verformungskörpers 2 zusammen, wie es in Figur 1 dargestellt ist, ist dies gleichbedeutend mit der Idealanordnung der Stempelwägezelle 1. In diesem Zustand erfährt ein Dehnmesssensor des zweiten Bestimmungsmittels 10 keine Längenänderung, da in der Nulldehnungsrichtung auch keine Dehnung bzw. keine Verformung auftritt. Das Signal des zweiten Bestimmungsmittels 10 ist daher bei Idealausrichtung gleich Null, d.h. lastunabhängig. Die Idealausrichtung und die Idealanordnung einer Stempelwägezelle 1 unterscheiden sich dadurch, dass die Mittellängsachse 8 und die Kraftbezugslinie 6, welche durch die Anordnung der Krafteinleitungselemente 11 zusammenfallen, im Falle der Idealanordnung nicht parallel zur Richtung der Schwerkraft G ausgerichtet sind. Im Falle der Idealausrichtung fallen die Kraftbezugslinie 6 die Mittellängsachse 8 und die Richtung der Schwerkraft G zusammen. Die Idealanordnung, wie in Figur 2 gezeigt, berücksichtigt dementsprechend nur die Anordnung der drei Bauteile Verformungskörper 2, oberes und unteres Krafteinleitungselement 11 untereinander, aber nicht die Stellung bzw. die Ausrichtung im Raum.

Als Schnitt durch die Figur 1 an der Stelle A-A zeigt die Figur 3 die Anordnung des ersten Bestimmungsmittels 9 und des zweiten Bestimmungsmittels 10 am Umfang des säulenförmigen Bereiches 7. Die vier Dehnmesssensorpaare des ersten Bestimmungsmittels 9 sind jeweils um 90° gedreht um die Mittellängsachse 8 versetzt, also paarweise einander diametral gegenüber angeordnet und können in einer wheatstoneschen Brückenschaltung geschaltet werden. Der mindestens eine Dehnmesssensor des zweiten Bestimmungsmittels 10 ist winkelsymmetrisch zwischen zwei Dehnmesssensoren des ersten Bestimmungsmittels 9 angeordnet. Das Signal des Dehnmesssensors entspricht bei einer Fehlstellung der Stempelwägezelle 1 dem Anteil der Fehlstellung in der Ebene E$_1$. Ordnet man einen weiteren Dehnmesssensor als zweites Bestimmungsmittel 10 in eine der Richtung von Ebene E$_1$ verschiedene Richtung,

vorzugsweise um 90° um die Mittellängsachse 8 gedreht, auf dem Umfang des säulenförmigen Bereichs 7 an, so erhält man bei einer Fehlstellung der Stempelwägezelle 1 ein weiteres Signal, welches dem Anteil der Fehlstellung in einer Ebene E$_2$ entspricht. Kombiniert man die Anteile der Fehlstellung aus beiden Ebenen E$_1$ und E$_2$, kann die Fehlstellung der Stempelwägezelle 1 in jede beliebige Raumrichtung ermittelt werden.

Werden den Dehnmesssensoren des zweiten Bestimmungsmittels 10 jeweils ein weiterer Dehnmesssensor auf dem Umfang einander diametral gegenüberliegend angeordnet, können die elektrischen Signale von den jeweils entgegengesetzten Dehnmesssensoren für ein besseres Messsignal in einer Wheatstone'schen Brückenschaltung zur Bestimmung einer Fehlstellung in der entsprechenden Ebene verwendet werden, oder einzeln verwendet werden um für die Kompensation mehr Freiheitsgrade bestimmen zu können.

Figur 4 ist eine Ansicht auf den säulenförmigen Bereich 7 aus der Blickrichtung B, wie in Figur 3 dargestellt. Die Figur 4 zeigt einen Ausschnitt des säulenförmigen Bereichs 7 des Verformungskörpers 2. Auf dem gleichen Umfang wie die Dehnmesssensoren des ersten Bestimmungsmittels 9 ist zwischen diesen der mindestens eine Dehnmesssensor des zweiten Bestimmungsmittels 10 angeordnet. Das zweite Bestimmungsmittel 10 ist um den Winkel θ zur Mittellängsachse 8 des säulenförmigen Bereichs 7 gedreht. Dieser Winkel ist vom Material des Verformungskörpers 2 abhängig und beträgt hier, in Figur 4, für den für Verformungskörper 2 üblicherweise verwendeten Stahl 61.3°.

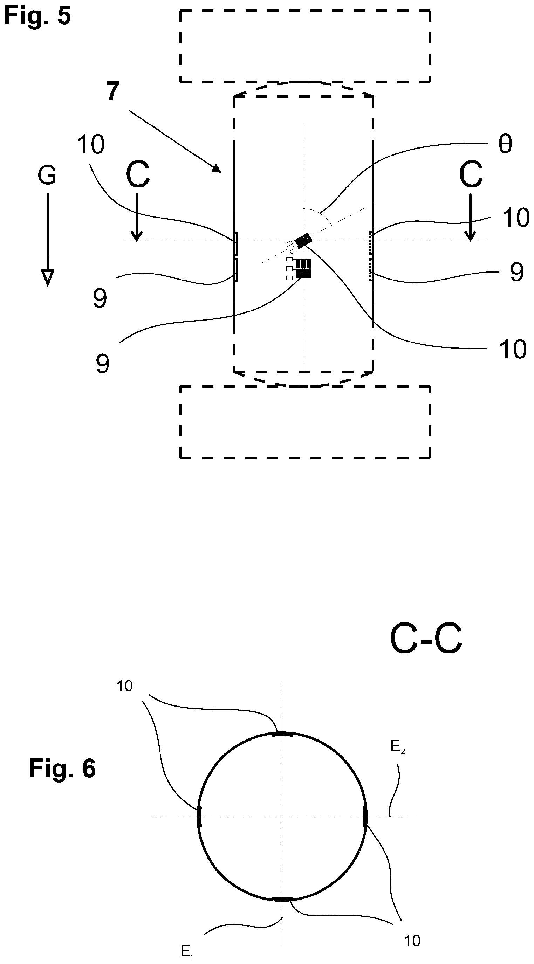

Die in den Figuren 1 bis 4 und 7 bis 10 dargestellte Anordnungen der Dehnmesssensoren des ersten Bestimmungsmittels 9 und des zweiten Bestimmungsmittels 10 ist nicht zwingend. Möglich ist auch eine Anordnung des ersten Bestimmungsmittels 9 ober- oder unterhalb der im Wesentlichen mittig zwischen den Kontaktflächen 3 und 4 angebrachten Dehnmesssensoren des zweiten Bestimmungsmittels 10, wie dies in der Figur 5 zu sehen ist. Zwar sind die Dehnmesssensoren des ersten Bestimmungsmittels 9 nicht mehr mittig auf der Mantelfläche des säulenförmigen Bereich 7 des Verformungskörpers 2 angeordnet, aber die Spannungsverteilung ist hier homogen genug um ein verwertbares Signal zu erhalten. Ein Vorteil dieser Anordnung liegt darin, dass die Dehnmesssensoren des ersten Bestimmungsmittels 9 und des zweiten Bestimmungsmittels 10 auf derselben Grundträgerfolie aufgebracht werden und zueinander ausgerichtet werden können, um in der Herstellung gemeinsam in einem Arbeitsgang platziert zu werden. Dadurch verringert sich der Zeitaufwand und Kosten können eingespart werden.

In Figur 6 ist ein Schnitt durch die Figur 5 an der Stelle C-C zu sehen. Auf derselben Umfangslinie in 90°-Schritten um die Mittellängsachse 8 gedreht sind die Dehnmesssensoren des zweiten Bestimmungsmittels 10 verteilt. Diese verdecken die Sicht auf die unterhalb angeordneten Dehnmesssensoren des ersten Bestimmungsmittels 9.

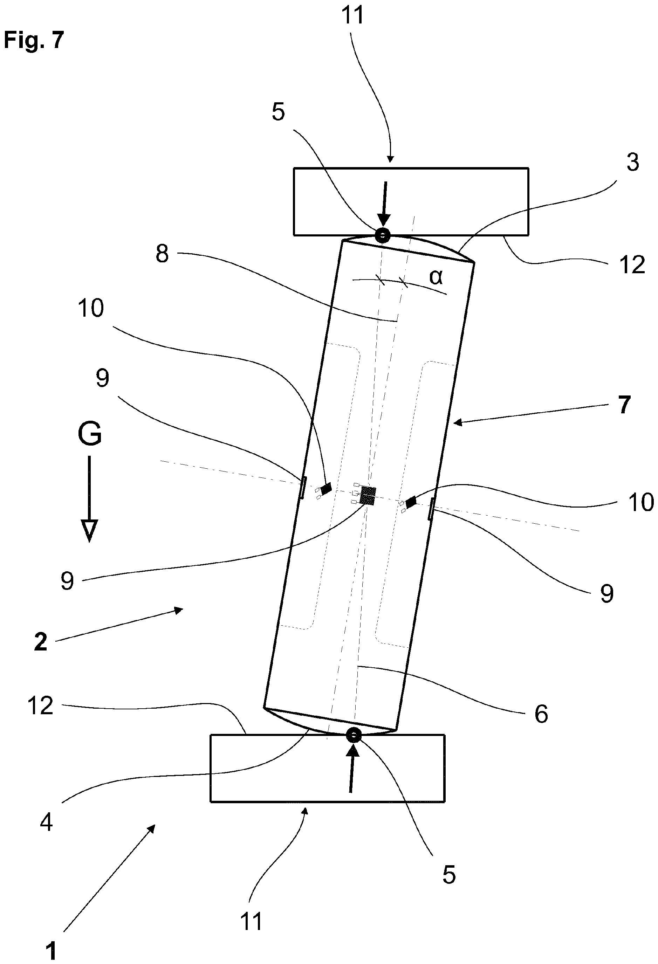

Die Fehlstellung einer Stempelwägezelle 1 hat einen Messfehler zur Folge. Figur 7 zeigt die Anordnung der Stempelwägezelle 1 aus Figur 1 bei einer Schrägstellung des Verformungskörpers 2, resultierend aus zueinander parallel verschobenen Krafteinleitungselementen 11. Durch das Verschieben der Krafteinleitungselemente 11 ändern sich auch die Auflagepunkte 5 auf der oberen Kontaktfläche 3 und der unteren Kontaktfläche 4. Folglich weicht nun die Kraftbezugslinie 6 von der Mittellängsachse 8 um den Winkel $\alpha$ ab, verläuft aber, bei gleichem Kugelradius der oberen Kontaktfläche 3 und der unteren Kontaktfläche 4 immer durch das Zentrum des Verformungskörpers 2. Das erste Bestimmungsmittel 9 misst nun nicht mehr exakt die applizierte Gewichtskraft, sondern ist fehlerbehaftet. Das um den Winkel $\theta$ gedreht angeordnete zweite Bestimmungsmittel 10 liegt ebenso nicht mehr in der Nulldehnungsrichtung und der Dehnmesssensor des zweiten Bestimmungsmittels 10 erfährt eine Längenänderung, welche als Signal ausgegeben wird. Dieses Signal ist eine Funktion der parallelen Krafteinleitungselementverschiebung bzw. der Schrägstellung des Verformungskörpers 2 und wird zur Errechnung der Kompensation des Wägeresultats genutzt.

Auch in Nulldehnungsrichtung verhält sich eine Verformung des Verformungskörpers 2 linear zur aufgebrachten Kraft. Die Wandlung der Verformung in Nulldehnungsrichtung bei nicht vorhandener Idealausrichtung in ein elektronisches Signal durch das zweite Bestimmungsmittel 10 erfolgt somit entsprechend der Grösse der Verformung in Nulldehnungsrichtung, und ist somit eine quantitative Messung. Das gewandelte Signal des zweiten Bestimmungsmittels 10 ist also nach obiger Ausführung eine quantitative Aussage über die Schrägstellung der Stempelwägezelle 1.

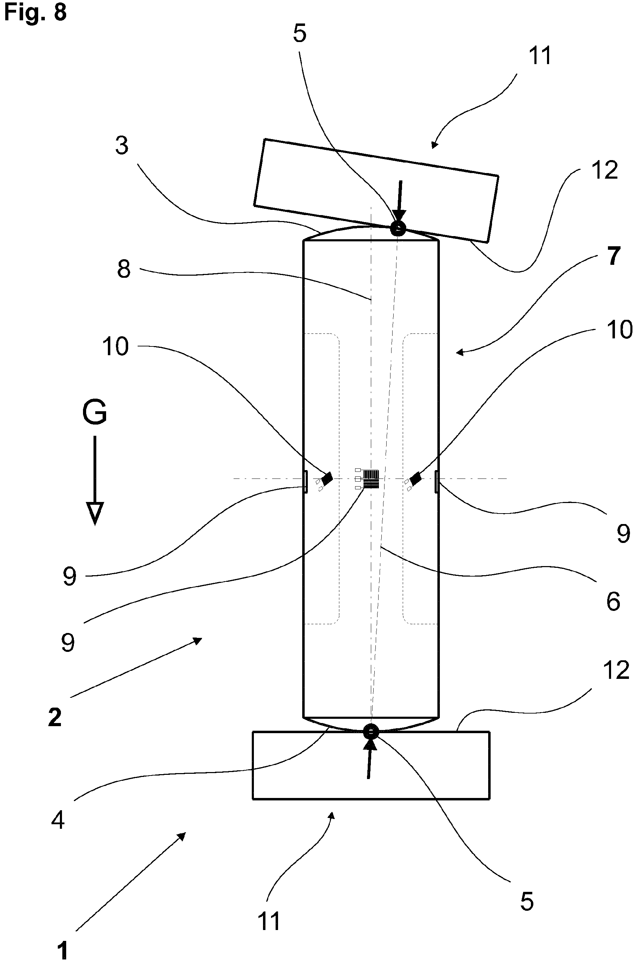

In Figur 8 ist die Stempelwägezelle 1 aus Figur 1 zu sehen, bei welcher das obere Krafteinleitungselement 11 verkippt aufliegt. Der obere Auflagepunkt 5 ist nach rechts verschoben wodurch die Kraftbezugslinie 6 nicht mehr mit der Mittellängsachse 8 zusammenfällt. Das Signal des ersten Bestimmungsmittels 9 entspricht nun nicht mehr exakt der applizierten Gewichtskraft der zu messenden Last, sondern muss wegen der Verkippung des oberen Krafteinleitungselements 11 kompensiert werden. Dies geschieht durch die zusätzliche Verwendung der Signale aus dem mindestens einen Dehnmesssensor des zweiten Bestimmungsmittels 10, welcher aufgrund der Verkippung nun nicht mehr exakt zur Nulldehnungsrichtung ausgerichtet ist.

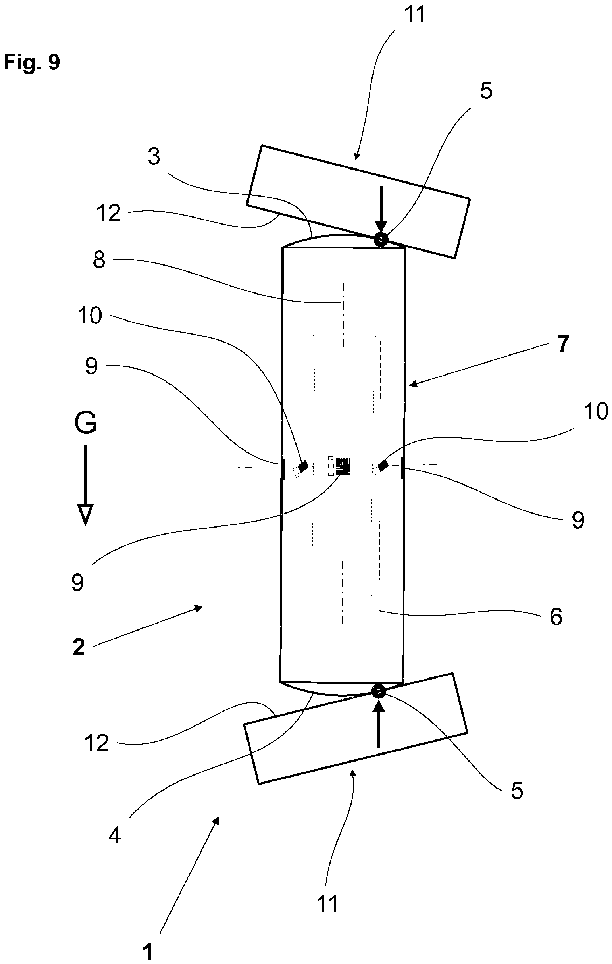

Zusätzlich zur Stempelwägezelle 1 aus Figur 8 sind bei der Stempelwägezelle 1 aus Figur 9 beide Krafteinleitungselemente 11 verkippt. Die Mittellängsachse 8 ist zwar parallel zur Kraftbezugslinie 6 fällt aber nicht mit dieser zusammen, und es findet eine Biegeverformung des Verformungskörpers 2 statt. Hier sind weitere an dieser Stelle nicht weiter ausgeführte Korrekturverfahren anzuwenden. Alternativ können weitere Dehnmesssoren in Ergänzung des zweiten Bestimmungsmittels 10 angebracht werden. Zum Beispiel können vier weitere Dehnmesssensoren, welche parallel zur Mittellängsachse 8 ausgerichtet sind und jeweils paarweise am Verformungskörper 2 einander gegenüberliegend angebracht sind, in Ergänzung zu den im vordefinierten, spitzen Winkel angeordneten Dehnmesssensoren zueinander jeweils um 90° um die Mittellängsachse 8 als Drehachse gedreht angeordnet sein, um die Fehlstellung zu ermitteln und die Kompensationswerte zu berechnen.

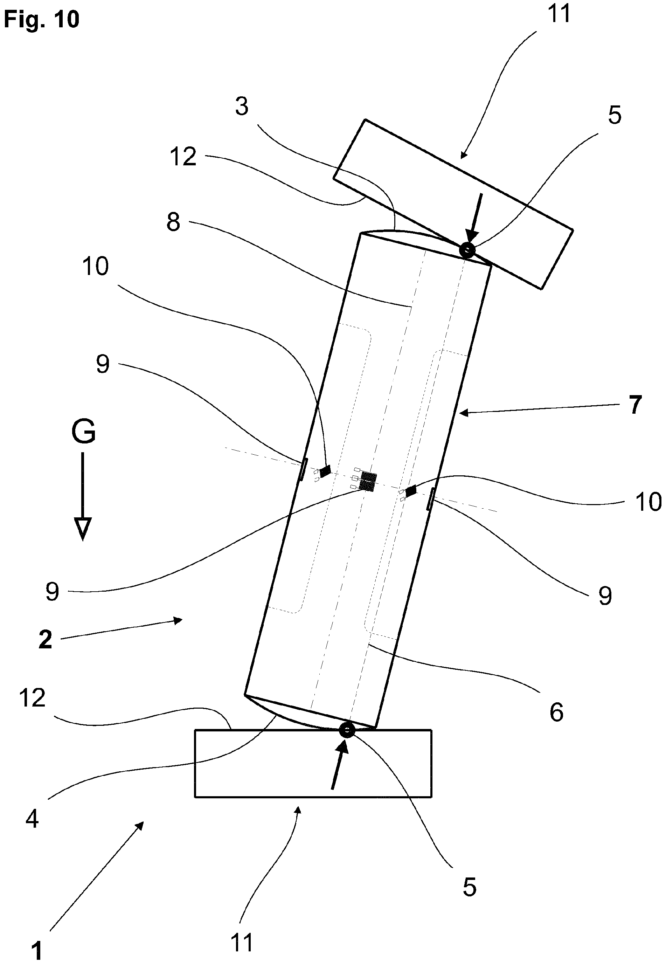

Figur 10 zeigt eine weitere Fehlstellung der Stempelwägezelle 1, bei welcher die Krafteinleitungselemente 11 zusätzlich zur Schrägstellung des Verformungskörpers 2 verkippt sind, das heisst die dem Verformungskörper 2 zugewandten Seiten 12 der Krafteinleitungselemente 11 sind nicht mehr parallel zueinander. Die Kraftbezugslinie 6 schneidet die Mittellängsachse 8 nicht mehr im Zentrum des Verformungskörpers 2 wodurch eine Ermittlung der Kompensation des Messsignals erschwert wird. Durch das Anbringen von vier Dehnmesssensorpaaren des ersten Bestimmungsmittels 9 und vier Dehnmesssensoren als zweites Bestimmungsmittel 10 am säulenförmigen Bereich 7 des Verformungskörpers 2 sind genügend viele Parameter bestimmbar um die Fehlstellung zu erfassen und eine geeignete Kompensation des Messsignals vorzunehmen.

Die Dehnmesssensoren des ersten Bestimmungsmittels 9 und die Dehnmesssensoren des zweiten Bestimmungsmittels 10 wandeln jeweils entsprechend der Grösse der Verformung in der Ihnen zugewiesenen Richtung in ein elektrisches Signal, d.h. es findet eine kontinuierliche Messung des Zustandes der Verformung statt, wobei die Grösse des elektrischen Signales das Ausmass der Verformung abbildet.

In der Verarbeitungseinheit (nicht gezeigt) wird das elektrische Signal des ersten Bestimmungsmittels 9 mit dem Signal des zweiten Bestimmungsmittels 10 korrigiert. Als Resultat gibt die Stempelwägezelle 1 eine in der Richtung der Schwere $g$ aufgebrachte Gewichtskraft $F_G$ zur Anzeige (nicht gezeigt) aus.

Mit derselben Anzahl an Dehnmesssensoren wie in der JP 2007 033 137 A verwendet werden, ist durch die Erfindung eine genauere Kompensation möglich. Anders betrachtet sind, um eine qualitative gleichwertige Kompensation wie jene der Vorrichtung aus JP 2007 033 137 A zu erreichen, gesamthaft weniger Dehnmesssensoren nötig als in der Vorrichtung aus JP 2007 033 137 A verwendet werden.

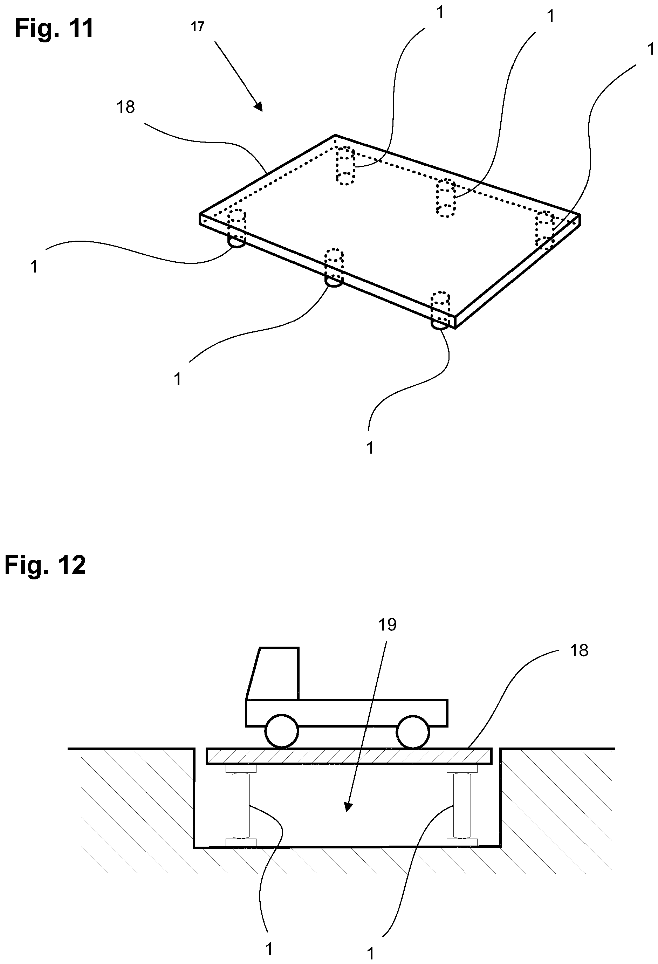

Die Figur 11 zeigt eine Waage, speziell eine Fahrzeugwaage. Die Waagenbrücke 18 ist eine ebene Fläche, welche der Aufnahme einer Last dient. Sie wird gestützt durch mindestens drei Stempelwägezellen, hier in Figur 11 durch sechs Stück, wobei diese unterhalb der Waagenbrücke 18 angeordnet sind und somit das Aufbringen der Last nicht behindern.

Die Stempelwägezellen 2 wiederum stützen sich auf dem Untergrund ab, welcher so gestaltet wird, dass die Wägebrücke ohne einen wesentlichen Absatz beladen bzw. befahren werden kann. Dies wird, wie in Figur 12 gezeigt, durch eine Wägegrube 19 realisiert, welche gerade so tief ist, dass die Auflagefläche der Wägebrücke 18 mit dem Boden eine Ebene bildet. Im seitlichen Querschnitt der Figur 12 sind zwei Stempelwägezellen 1 abgebildet. Zwei weitere Stempelwägezellen (die Waagenbrücke steht auf mindestens vier Stempelwägezellen 1) sind dem Betrachter durch die beiden vorneliegenden Stempelwägezellen 1 verdeckt und deshalb nicht zu sehen. Je nach Grösse und Nennlast der Waagenbrücke sind Anordnungen von sechs, acht, oder mehr Stempelwägezellen 1 denkbar.

Obwohl die Erfindung durch die Darstellung mehrerer spezifischen Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

**Bezugszeichenliste**

| 1 | Stempelwägezelle |
|---|---|
| 2 | Verformungskörper |
| 3 | Obere Kontaktfläche |
| 4 | Untere Kontaktfläche |
| 5 | Auflagepunkt |
| 6 | Kraftbezugslinie |
| 7 | Säulenförmiger Bereich (des Verformungskörpers) |
| 8 | Mittellängsachse (des Verformungskörpers) |
| 9 | Erstes Bestimmungsmittel |
| 10 | Zweites Bestimmungsmittel |
| 11 | Krafteinleitungselement |
| 12 | stempelwägezellenzugewandte Seite des Krafteinleitungselementes |
| 17 | Waage |
| 18 | Waagenbrücke |
| 19 | Wägegrube |

| $E_1$ | Erste Fehlstellungsebene |
|---|---|
| $E_2$ | Zweite Fehlstellungsebene |
| G | Schwerkraft |

**Patentansprüche**

1. Stempelwägezelle (1) mit einem Verformungskörper (2) mit einer oberen Kontaktfläche (3) und einer unteren Kontaktfläche (4), welche für die Krafteinleitung in den Verformungskörper (2) entsprechend mit einer Kugeloberfläche ausgestaltet sind und dabei je einen Auflagepunkt (5) aufweisen, wobei die aktuellen Auflagepunkte (5) zusammen eine Kraftbezugslinie (6) definieren, mit mindestens einem zwischen der oberen Kontaktfläche (3) und der unteren Kontaktfläche (4) angeordneten, säulenförmigen Bereich (7) des Verformungskörpers (2), welcher eine Mittellängsachse (8) und eine zu dieser parallele Mantellinie aufweist, mit einem ersten Bestimmungsmittel (9), welches am säulenförmigen Bereich (7) des Verformungskörpers (2) angebracht ist und die mechanische Verformung des Verformungskörpers (2) in ein Signal wandelt, und einem zweiten Bestimmungsmittel (10), welches am säulenförmigen Bereich (7) des Verformungskörpers (2) angebracht ist, und eine Abweichung der Mittellängsachse (8) zur Kraftbezugslinie (6) in ein entsprechendes Signal wandelt, wobei das erste Bestimmungsmittel (9) und das zweite Bestimmungsmittel (10) jeweils mindestens einen Dehnmesssensor aufweisen **dadurch gekennzeichnet, dass** der mindestens eine Dehnmesssensor des zweiten Bestimmungsmittels (10) im Wesentlichen mittig zwischen der oberen Kontaktfläche (3) und unteren Kontaktfläche (4) angebracht ist und dabei um einen vordefinierten, spitzen Winkel in Bezug zur Mantellinie derart ausgerichtet ist, dass das Signal des zweiten Bestimmungsmittels (10) bei fehlender Abweichung der Mittellängsachse (8) zur Kraftbezugslinie (6) Null wird, und dass das Signal des zweiten Bestimmungsmittels (10) dazu geeignet ist, Kompensationswerte bezüglich einer Abweichung der Mittellängsachse (8) zur Kraftbezugslinie (6) zu bestimmen.

2. Stempelwägezelle (1) nach Anspruch 1, **dadurch gekennzeichnet, dass** die Grösse des vordefinierten, spitzen Winkels vom verwendeten Werkstoff des säulenförmigen Bereiches (7) des Verformungskörpers (2), insbesondere von der Poissonzahl des Werkstoffes, abhängig ist.

3. Stempelwägezelle (1) nach Anspruch 2, **dadurch gekennzeichnet, dass** der vordefinierte, spitze Winkel im Bereich von 54° bis 72° liegt, abhängig vom verwendeten Werkstoff des säulenförmigen Bereiches (7) des Verformungskörpers (2).

4. Stempelwägezelle (1) nach Anspruch 3, **dadurch gekennzeichnet, dass** für Verformungskörper (2) aus dem dafür üblicherweise verwendetem Stahl der vordefinierte, spitze Winkel bei 61,3° liegt.

5. Stempelwägezelle (1) nach einem der Ansprüche 1 bis 4, **dadurch gekennzeichnet, dass** das erste Bestimmungsmittel (9) und das zweite Bestimmungsmittel (10) an der Mantelfläche des säulenförmigen Bereichs (7), insbesondere möglichst mittig zwischen den Kontaktflächen (3, 4) angebracht sind.

6. Stempelwägezelle (1) nach Anspruch 5, **dadurch gekennzeichnet, dass** das erste Bestimmungsmittel (9) und/oder das zweite Bestimmungsmittel (10) jeweils mindestens zwei einander in Bezug zur Mittellängsachse (8) gegenüberliegende Dehnmesssensoren oder Dehnmesssensorpaare aufweisen/aufweist.

7. Stempelwägezelle (1) nach Anspruch 1 bis 6, **dadurch gekennzeichnet, dass** zwei Dehnmesssensoren oder Dehnmesssensorpaare des ersten Bestimmungsmittels (9) und/oder zwei Dehnmesssensoren des zweiten Bestimmungsmittels (10) in einen Winkel, insbesondere in einen Winkel von 90°, um die Mittellängsachse (8) als Drehachse gedreht, jeweils auf der Mantelfläche, zueinander angeordnet sind.

8. Stempelwägezelle (1) nach einem der Ansprüche 5 bis 7, **dadurch gekennzeichnet, dass** die mindestens zwei Dehnmesssensoren des zweiten Bestimmungsmittels (10) jeweils zwischen den Dehnmesssensoren des ersten Bestimmungsmittels (9), insbesondere mittig, und zueinander um 90° um die Mittellängsachse (8) als Drehachse gedreht, angeordnet sind.

9. Stempelwägezelle (1) nach einem der Ansprüche 5 bis 8, **dadurch gekennzeichnet, dass** dass das zweite Bestimmungsmittel (10) zwei im vordefinierten, spitzen Winkel angeordnete Dehnmesssensoren und vier weitere Dehnmesssensoren, welche parallel zur Mittellängsachse (8) ausgerichtet sind und jeweils paarweise am Verformungskörper (2) einander gegenüberliegend angebracht sind, aufweist, wobei die im vordefinierten, spitzen Winkel angeordneten Dehnmesssensoren und die beiden Paare von Dehnmesssensoren zueinander jeweils um 90° um die Mittellängsachse (8) als Drehachse gedreht sind.

10. Stempelwägezelle (1) nach einem der Ansprüche 1 bis 8, **dadurch gekennzeichnet, dass** der säulenförmige Bereich (7) des Verformungskörpers (2) entlang seiner Mittellängsachse (8) mindestens zwei Durchmesser aufweist, insbesondere hantelförmig ist.

11. Waage (1), insbesondere eine Fahrzeugwaage, Tankwaage oder Behälterwaage, mit mindestens einer Stempelwägezelle (1) nach einem der Ansprüche 1 bis 10.

12. Verfahren zur Fehlstellungskompensation einer Stempelwägezelle (1), mit einem Verformungskörper (2) mit einer oberen Kontaktfläche (3) und einer unteren Kontaktfläche (4), welche für die Krafteinleitung in den Verformungskörper (2) entsprechend mit einer Kugeloberfläche ausgestaltet sind und dabei je einen Auflagepunkt (5) aufweisen, wobei die aktuellen Auflagepunkte (5) zusammen eine Kraftbezugslinie (6) definieren, mit mindestens einem zwischen der oberen Kontaktfläche (3) und der unteren Kontaktfläche (4) angeordneten, säulenförmigen Bereich (7) des Verformungskörpers (2), welcher eine Mittellängsachse (8) und eine zu dieser parallele Mantellinie aufweist, wobei ein erstes Bestimmungsmittel (9) und ein zweites Bestimmungsmittel (10) jeweils mindestens einen Dehnmesssensor aufweisen

**gekennzeichnet durch die folgenden Schritte**

- Zur Verfügung stellen von mindestens einem Dehnmesssensor als erstes Bestimmungsmittel (9), welcher derart an der Mantelfläche des säulenförmigen Bereichs (2) des Verformungskörpers (2) angebracht ist, dass die mechanische Verformung des Verformungskörpers (2) in ein Signal des ersten Bestimmungsmittels (9) gewandelt wird,
- Zur Verfügung stellen von mindestens einem Dehnmesssensor als zweites Bestimmungsmittel (10), welcher derart an der Mantelfläche des säulenförmigen Bereichs (2) des Verformungskörpers (2) angebracht ist, dass eine Abweichung der Mittellängsachse (8) zur Kraftbezugslinie (6) in ein Signal des zweiten Bestimmungsmittels (10) gewandelt wird, wobei der mindestens einer der Dehnmesssensoren mittig zwischen der oberen Kontaktfläche (3) und unteren Kontaktfläche (4) angebracht ist und dabei um einen vordefinierten, spitzen Winkel in Bezug zur Mantellinie derart ausgerichtet ist, dass das Signal des zweiten Bestimmungsmittels (10) bei fehlender Abweichung der Mittellängsachse (8) zur Kraftbezugslinie (6) Null wird,
- Ermitteln des Signals des mindestens einen Dehnmesssensors des ersten Bestimmungsmittels (9),
- Ermitteln des Signals des mindestens einen um den vordefinierten, spitzen Winkel in Bezug zur Mantellinie ausgerichteten Dehnmesssensors des zweiten Bestimmungsmittels (10),
- Bestimmen von Kompensationswerten bezüglich einer Fehlstellung der Stempelwägezelle (1), wobei mindestens ein Signal des zweiten Bestimmungsmittels (10) verwendet wird,
- Berechnen eines kompensierten Wägeresultats aus dem Signal des ersten Bestimmungsmittels (9), und den Kompensationswerten, und gegebenenfalls aus weiteren Signalen des zweiten Bestimmungsmittels (10).

13. Verfahren zur Fehlstellungskompensation einer Stempelwägezelle (1) nach Anspruch 12, **dadurch gekennzeichnet, dass** bei der Bestimmung der Kompensationswerte zwischen parallel verschobenen Krafteinleitungselementen (11), verkippten Krafteinleitungselementen (11), und parallel verschobenen und verkippten Krafteinleitungselementen (11), unterschieden wird.

**14.** Verfahren zur Fehlstellungskompensation einer Stempelwägezelle (1) nach einem der Ansprüche 12 oder 13, **dadurch gekennzeichnet, dass** eine Verarbeitungseinheit die Signale der Dehnmesssensoren des ersten Bestimmungsmittels (9) und/oder des zweiten Bestimmungsmittels (10) einzeln und/oder paarweise ermittelt.

**15.** Verfahren zur Fehlstellungskompensation einer Stempelwägezelle (1) nach einem der Ansprüche 12 bis 14, **dadurch gekennzeichnet, dass** die Ermittlung der einzelnen Signale der Dehnmesssensoren des ersten Bestimmungsmittels (9) und/oder des zweiten Bestimmungsmittels (10) in der Verarbeitungseinheit zeitlich seriell erfolgt.

**Claims**

**1.** A pillar-type load cell (1) having a deformation body (2) with an upper contact surface (3) and a lower contact surface (4) correspondingly designed with a spherical surface for introducing force into the deformation body (2) and each having a support point (5), wherein the current support points (5) together define a force reference line (6), with at least one columnar region (7) of the deformation body (2) arranged between the upper contact surface (3) and the lower contact surface (4) having a central longitudinal axis (8) and an outer surface line parallel thereto, with a first determination means (9), which is mounted on the columnar region (7) of the deformation body (2) and converts the mechanical deformation of the deformation body (2) into a signal, and a second determination means (10), which is mounted on the columnar region (7) of the deformation body (2) and converts a deviation of the central longitudinal axis (8) from the force reference line (6) into a corresponding signal, wherein the first determination means (9) and the second determination means (10) each have at least one strain gauge sensor, **characterized in that** the at least one strain gauge sensor of the second determination means (10) is mounted substantially centrally between the upper contact surface (3) and the lower contact surface (4) and is oriented by a predefined acute angle relative to the outer surface line in such a manner that the signal of the second determination means (10) becomes null if the central longitudinal axis (8) does not deviate from the force reference line (6) and that the signal of the second determination means (10) is suitable for determining compensation values with respect to a deviation of the central longitudinal axis (8) from the force reference line (6).

**2.** The pillar-type load cell (1) according to claim 1, **characterized in that** the magnitude of the predefined acute angle depends on the material used of the columnar region (7) of the deformation body (2), in particular on the Poisson's ratio of the material.

**3.** The pillar-type load cell (1) according to claim 2, **characterized in that** the predefined acute angle is in the range of 54° to 72°, depending on the material used of the columnar region (7) of the deformation body (2).

**4.** The pillar-type load cell (1) according to claim 3, **characterized in that** for deformation bodies (2) made from the steel commonly used for this purpose the predefined acute angle is 61.3°.

**5.** The pillar-type load cell (1) according to any one of claims 1 to 4, **characterized in that** the first determination means (9) and the second determination means (10) are mounted on the outer surface of the columnar region (7) in particular possibly centrally between the contact surfaces (3, 4).

**6.** The pillar-type load cell (1) according to claim 5, **characterized in that** the first determination means (9) and/or the second determination means (10) each have/has at least two strain gauge sensors or strain gauge sensor pairs opposite one another relative to the central longitudinal axis (8).

**7.** The pillar-type load cell (1) according to claims 1 to 6, **characterized in that** two strain gauge sensors or strain gauge sensor pairs of the first determination means (9) and/or two strain gauge sensors of the second determination means (10) are each arranged on the outer surface rotated with respect to one another at an angle, in particular an angle of 90°, about the central longitudinal axis (8) as the rotation axis.

**8.** The pillar-type load cell (1) according to any one of claims 5 to 7, **characterized in that** the at least two strain gauge sensors of the second determination means (10) are each arranged between the strain gauge sensors of the first determination means (9), in particular centrally, and rotated with respect to one another by 90° about the central longitudinal axis (8) as the rotation axis.

**9.** The pillar-type load cell (1) according to any one of claims 5 to 8, **characterized in that** the second determination means (10) has two strain gauge sensors arranged at the predefined acute angle and four additional strain gauge sensors oriented parallel to the central longitudinal axis (8) and each mounted in pairs on the deformation body (2) opposite one another, wherein the strain gauge sensors arranged at the predefined acute angle and the two pairs of strain gauge sensors are each rotated with respect to one another by 90° about the central longitudinal axis (8) as the rotation axis.

10. The pillar-type load cell (1) according to any one of claims 1 to 8, **characterized in that** the columnar region (7) of the deformation body (2) has at least two diameters along its central longitudinal axis (8), in particular is dumbbell-shaped.

11. A scale (1), in particular a vehicle scale, tank scale or container scale, having at least one pillar-type load cell (1) according to any one of claims 1 to 10.

12. A method for compensation of misalignment of a pillar-type load cell (1) having a deformation body (2) with an upper contact surface (3) and a lower contact surface (4) correspondingly designed with a spherical surface for introducing force into the deformation body (2) and each having a support point (5), wherein the current support points (5) together define a force reference line (6), with at least one columnar region (7) of the deformation body (2) arranged between the upper contact surface (3) and the lower contact surface (4) having a central longitudinal axis (8) and an outer surface line parallel thereto, wherein a first determination means (9) and a second determination means (10) each have at least one strain gauge sensor, **characterized by the following steps**

- providing at least on strain gauge sensor as a first determination means (9), which is mounted on the outer surface of the columnar region (7) of the deformation body (2) in such a manner that the mechanical deformation of the deformation body (2) is converted into a signal of the first determination means (9),
- providing at least one strain gauge sensor as a second determination means (10), which is mounted on the outer surface of the columnar region (7) of the deformation body (2) in such a manner that a deviation of the central longitudinal axis (8) from the force reference line (6) is converted into a signal of the second determination means (10), wherein the at least one strain gauge sensor is mounted centrally between the upper contact surface (3) and the lower contact surface (4) and is oriented by a predefined acute angle relative to the outer surface line in such a manner that the signal of the second determination means (10) becomes null if the central longitudinal axis (8) does not deviate from the force reference line (6),
- determining the signal of the at least one strain gauge sensor of the first determination means (9),
- determining the signal of the at least one strain gauge sensor of the second determination means (10) oriented by the predefined acute angle relative to the outer surface line,
- determining compensation values with respect to a misalignment of the stamp load cell (1), wherein at least one signal of the second determination means (10) is used,
- calculating a compensated weighing result from the signal of the first determination means (9) and the compensation values and optionally from additional signals of the second determination means (10).

13. The method for compensation of misalignment of a pillar-type load cell (1) according to claim 12, **characterized in that** during determination of the compensation values, a differentiation is made between force introduction elements (11) displaced in parallel, titled force introduction elements (11) and tilted force introduction elements (11) displaced in parallel.

14. The method for compensation of misalignment of a pillar-type load cell (1) according to any one of claims 12 or 13, **characterized in that** a processing unit determines the signals of the strain gauge sensors of the first determination means (9) and/or the second determination means (10) individually and/or in pairs.

15. The method for compensation of misalignment of a pillar-type load cell (1) according to any one of claims 12 to 14, **characterized in that** the determination of the individual signals of the strain gauge sensors of the first determination means (9) and/or the second determination means (10) in the processing unit occurs serially in terms of time.

**Revendications**

1. Cellule de pesage de type pilier (1) comportant un élément déformable (2) qui possède une surface de contact supérieure (3) et une surface de contact inférieure (4), qui sont conçues en conséquence avec une surface sphérique pour appliquer une force à l'élément déformable (2) et, pour cela, présentent chacun un point d'appui (5), dans laquelle les points d'appui actuels (5) définissent ensemble une ligne de référence de force (6), comportant au moins une zone en forme de colonne (7) de l'élément déformable disposée entre la surface de contact supérieure (3) et la surface de contact inférieure (4), lequel élément déformable présente un axe médian longitudinal (8) et une ligne d'enveloppe parallèle à celui-ci, comportant un premier moyen de détermination (9) qui est monté sur la zone en forme de colonne (7) de l'élément déformable (2) et convertit la déformation mécanique de l'élément déformable (2) en un signal, et un second moyen de détermination (10) qui est monté sur la zone en forme de colonne (7) de l'élément déformable (2) et convertit un écart de l'axe médian longitudinal (8) par rapport à la ligne de référence de force (6) en un signal correspondant, dans laquelle le premier moyen de détermination (9) et le second moyen de détermination (10) présentent chacun au moins un capteur extensométrique, **caractérisée en ce que** l'au moins un capteur extensométrique du second moyen de détermination (10) est monté sensiblement au milieu entre la surface de contact supérieure (3) et la surface de contact inférieure (4) et ainsi est orienté selon un angle aigu prédéfini par rapport à la ligne d'enveloppe de sorte que le signal du second moyen de détermination (10) devient nul en l'absence d'écart de l'axe médian longitudinal (8) par rapport à la ligne de référence de force (6), et **en ce que** le signal du second moyen de détermination (10) est approprié pour déterminer des valeurs de compensation concernant un écart de l'axe médian longitudinal (8) par rapport à la ligne de référence de force (6).

**2.** Cellule de pesage de type pilier (1) selon la revendication 1, **caractérisée en ce que** la taille de l'angle aigu prédéfini dépend du matériau utilisé pour la zone en forme de colonne (7) de l'élément déformable (2), en particulier du coefficient de Poisson du matériau.

**3.** Cellule de pesage de type pilier (1) selon la revendication 2, **caractérisée en ce que** l'angle aigu prédéfini est compris entre 54° et 72°, en fonction du matériau utilisé pour la zone en forme de colonne (7) de l'élément déformable (2).

**4.** Cellule de pesage de type pilier (1) selon la revendication 3, **caractérisée en ce que,** pour l'élément déformable (2) en acier habituellement utilisé à cet effet, l'angle aigu prédéfini est de 61,3°.

**5.** Cellule de pesage de type pilier (1) selon l'une des revendications 1 à 4, **caractérisée en ce que** le premier moyen de détermination (9) et le second moyen de détermination (10) sont montés sur la surface d'enveloppe de la zone en forme de colonne (7), en particulier aussi au centre que possible entre les surfaces de contact (3, 4).

**6.** Cellule de pesage de type pilier (1) selon la revendication 5, **caractérisée en ce que** le premier moyen de détermination (9) et/ou le second moyen de détermination (10) présente(nt) chacun au moins deux capteurs extensométriques ou paires de capteurs extensométriques opposés l'un à l'autre par rapport à l'axe médian longitudinal (8).

**7.** Cellule de pesage de type pilier (1) selon les revendications 1 à 6, **caractérisée en ce que** deux capteurs extensométriques ou paires de capteurs extensométriques du premier moyen de détermination (9) et/ou deux capteurs extensométriques du second moyen de détermination (10) sont disposés l'un par rapport à l'autre sur la surface d'enveloppe tournés d'un certain angle, en particulier d'un angle de 90 °, autour de l'axe médian longitudinal (8) comme axe de rotation.

**8.** Cellule de pesage de type pilier (1) selon l'une des revendications 5 à 7, **caractérisée en ce que** les au moins deux capteurs extensométriques du second moyen de détermination (10) sont disposés chacun entre les capteurs extensométriques du premier moyen de détermination (9), en particulier au milieu, et sont tournés de 90° l'un par rapport à l'autre autour de l'axe médian longitudinal (8) comme axe de rotation.

**9.** Cellule de pesage de type pilier (1) selon l'une des revendications 5 à 8, **caractérisée en ce que** le second moyen de détermination (10) présente deux capteurs extensométriques disposés à un angle aigu prédéfini et quatre autres capteurs extensométriques qui sont orientés parallèlement à l'axe médian longitudinal (8) et sont montés par paires en face l'une de l'autre sur l'élément déformable (2), dans laquelle les capteurs extensométriques disposées selon l'angle aigu prédéfini et les deux paires de capteurs extensométriques étant tournées de 90° l'une par rapport à l'autre autour de l'axe médian longitudinal (8) comme axe de rotation.

**10.** Cellule de pesage de type pilier (1) selon l'une des revendications 1 à 8, **caractérisée en ce que** la zone en forme de colonne (7) de l'élément déformable (2) présente au moins deux diamètres le long de son axe médian longitudinal (8), en particulier en forme d'haltère.

**11.** Balance (1), en particulier balance pour véhicule, balance pour citerne ou balance pour conteneur, comportant au moins une cellule de pesage de type pilier (1) selon l'une des revendications 1 à 10.

**12.** Procédé pour compenser le désalignement d'une cellule de pesage de type pilier (1), comportant un élément déformable (2) qui possède une surface de contact supérieure (3) et une surface de contact inférieure (4), qui sont conçues en conséquence avec une surface sphérique pour appliquer une force à l'élément déformable (2) et, pour cela, présentent chacune un point d'appui (5), dans lequel les points d'appui actuels (5) définissent ensemble une ligne de référence de force (6), comportant au moins une zone en forme de colonne (7) de l'élément déformable (2) disposée entre la surface de contact supérieure (3) et la surface de contact inférieure (4), lequel élément déformable présente un axe médian longitudinal (8) et une ligne d'enveloppe parallèle à celui-ci, dans lequel un premier moyen de détermination (9) et un second moyen de détermination (10) présentent chacun au moins un capteur extensométrique

**caractérisé par les étapes suivantes**

- la mise à disposition d'au moins un capteur extensométrique en tant que premier moyen de détermination (9), lequel est monté sur la surface d'enveloppe de la zone en forme de colonne (7) de l'élément de déformation (2) de sorte que la déformation mécanique de l'élément déformable (2) est convertie en un signal du premier moyen de détermination (9),

- la mise à disposition d'au moins un capteur extensométique en tant que second moyen de détermination (10), lequel est monté sur la surface d'enveloppe de la zone en forme de colonne (7) de l'élément déformable (2) de sorte qu'un écart de l'axe médian longitudinal (8) par rapport à la ligne de référence de force (6) est converti en un signal du second moyen de détermination (10), dans lequel l'au moins un des capteurs extensométriques est monté au milieu entre la surface de contact supérieure (3) et la surface de contact inférieure (4) et ainsi est orienté selon un angle aigu prédéfini par rapport à la ligne d'enveloppe de sorte que le signal du second moyen de détermination (10) devient nul en l'absence d'écart de l'axe médian longitudinal (8) par rapport à la ligne de référence de force (6),

- l'évaluation du signal de l'au moins un capteur extensométrique du premier moyen de détermination (9),

- l'évaluation du signal de l'au moins un capteur extensométrique du second moyen de détermination (10), qui est orienté selon l'angle aigu prédéfini par rapport à la ligne d'enveloppe,

- la détermination de valeurs de compensation en ce qui concerne un désalignement de la cellule de pesage à tampon (1), dans lequel au moins un signal du second moyen de détermination (10) est utilisé,

- le calcul d'un résultat de pesage compensé à partir du signal du premier moyen de détermination (9) et des valeurs de compensation, et éventuellement à partir d'autres signaux du second moyen de détermination (10).

13. Procédé pour compenser le désalignement d'une cellule de pesage de type pilier (1) selon la revendication 12, **caractérisé en ce que,** lors de la détermination des valeurs de compensation, une distinction est faite entre des éléments d'application de force décalés parallèlement (11), des éléments d'application de force inclinés (11) et des éléments d'application de force décalés parallèlement et inclinés (11).

14. Procédé pour compenser le désalignement d'une cellule de pesage de type pilier (1) selon l'une des revendications 12 ou 13, **caractérisé en ce qu'une** unité de traitement détermine les signaux des capteurs extensométriques du premier moyen de détermination (9) et/ou du second moyen de détermination (10) individuellement et/ou par paires.

15. Procédé pour compenser le désalignement d'une cellule de pesage de type pilier (1) selon l'une des revendications 12 à 14, **caractérisé en ce que** l'évaluation des signaux individuels des capteurs extensométriques du premier moyen de détermination (9) et/ou du second moyen de détermination (10) a lieu dans l'unité de traitement selon une série chronologique.

**Fig. 1**

**Fig. 2**

G

A-A

$E_2$

9

**Fig. 3**

10

10

9

B

$E_1$

**Fig. 4**

7

10

9

θ

9

10

## Fig. 5

## C-C

## Fig. 6

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4408518 B
- JP 2010133785 A
- EP 1486762 A2
- JP 2007033127 A
- JP 2010210357 B
- EP 0209400 A2
- US 7188535 B1
- JP 2007033137 A